# FASCICULE DE BREVET EUROPEEN

(11) **EP 0 951 928 B1**
(45) Date de publication et mention de la délivrance du brevet: **13.08.2003**
(21) Numéro de dépôt: 99400989.2
(22) Date de dépôt: 22.04.1999
(51) Int. Cl.: B01D 29/25, B01D 29/96

(54) **Filtre et cartouche de filtre jetable**
Filter und Wegwerffiltereinsatz
Filter and disposable filter cartridge

(30) Priorité: 23.04.1998 US 65824
(43) Date de publication de la demande: 27.10.1999
(73) Titulaire: Framatome Technologies, Inc., Lynchburg, Virginia 24506-0935 (US)
(72) Inventeur: Wertz, Glenn R. III, Forest, Virginis 24551 (US)
(74) Mandataire: Bouget, Lucien

(56) Documents cités:
- US-A- 5 593 578
- US-A- 5 678 230

## Description

La présente invention se rapporte de manière générale aux filtres et plus particulièrement à un filtre jetable pour enlever des matières en particules dans un flux aqueux, spécialement des matériaux radioactifs entraînés par de l'eau de refroidissement dans des installations nucléaires, qui présente un filtre amélioré du type à cartouche pour une utilisation dans de telles installations pour réduire le volume et le poids de rejets dangereux résultants en fin de vie du filtre.

Les réacteurs nucléaires utilisent de l'eau dans des systèmes d'exploitation primaires et secondaires. Certaines des particules entraînées dans ces systèmes sont radioactives. Ces particules radioactives doivent être enlevées pour faire fonctionner ces systèmes et assurer leur entretien en toute sécurité et de manière efficace. Tout ceci est réalisé de manière conventionnelle par des éléments de filtre qui sont installés pour une période de temps donnée pour enlever les particules. Après une période de temps, le filtre est colmaté avec des particules enlevées et doit être remplacé.

Des filtres conventionnels ont, dans ce but, un cylindre externe perforé en acier inoxydable et, dans certains cas, un cylindre interne en acier inoxydable et des embouts d'extrémité en acier inoxydable ainsi qu'un milieu de filtration installé de manière permanente à l'intérieur. Le filtrat s'écoule depuis l'intérieur vers l'extérieur à travers le milieu filtrant et les pores du cylindre en acier inoxydable. Le cylindre en acier inoxydable extérieur et les embouts d'extrémité ont été considérés comme devant donner au filtre la résistance de structure et l'intégrité suffisantes pour supporter la température, la pression et les charges de filtration dynamiques dues aux forces du liquide en circulation et éviter la corrosion.

Cependant, quand le filtre est usé, les cylindres externe et interne et les embouts d'extrémité deviennent une partie des déchets radioactifs dangereux, de grande taille, à haute résistance mécanique et à la corrosion et de grand poids. Les exigences concernant l'élimination de ce type de déchets en toute sécurité sont très coûteuses. L'acier est difficile à comprimer pour obtenir un volume réduit et ne peut être facilement déchiqueté sous forme de pièces plus petites. L'élimination du filtre en conséquence nécessite de grands frais.

Une solution à ce problème est décrite dans les brevets américains n° 5,478,469 et n° 5,678,230 délivrés au nom de Bryan et Pop. Ces brevets décrivent un filtre jetable pour enlever des particules de matière dangereuse d'un flux aqueux. Le filtre comporte un boîtier de support rigide ayant une ouverture d'entrée pour le flux aqueux, une ouverture de sortie pour le flux aqueux, un dispositif d'attache pour le relier de manière sûre à un récipient de filtre à flux aqueux, un joint d'étanchéité interne et un joint d'étanchéité externe et une cartouche de filtre jetable ayant une configuration similaire à celle du boîtier et dimensionnée pour être pratiquement entièrement logée à l'intérieur du boîtier et pour être reliée de manière étanche au joint interne et ayant un milieu de filtration qui s'étend à travers un parcours de circulation entre l'ouverture d'entrée et l'ouverture de sortie quand elle est logée dans le boîtier, la cartouche ayant un joint terminal disposé pour la relier de manière étanche au récipient de filtre à flux aqueux à l'extérieur du boîtier, quand la cartouche est engagée de manière étanche sur le joint interne. Le boîtier de support rigide peut être installé dans un récipient de filtre pendant une longue période et maintenu en place par le dispositif d'attache et de manière répétée pendant la longue période, une cartouche jetable peut être installée dans le boîtier pour relier de manière étanche la cartouche au récipient du filtre, le flux aqueux peut être dirigé à travers le milieu filtrant, et la cartouche peut être enlevée et jetée. En contrepartie de ces avantages, le filtre de Bryan et Pop présente en fait quelques inconvénients. De manière spécifique, le dispositif d'attache est difficile à usiner et à installer sur place. De plus, le filtre jetable comporte des pièces métalliques qui sont difficiles à éliminer. Enfin, la manchette externe poreuse utilisée pour accroître la résistance du filtre jetable prend un espace critique qui limite les applications qui pourraient bénéficier du filtre.

Ainsi, il subsiste un besoin pour un filtre jetable nouveau et amélioré qui fonctionne de manière satisfaisante dans les installations existantes, réduit le coût d'élimination des filtres usés contaminés par des matières dangereuses telles que des matières en particules radioactives et en même temps, résout les problèmes associés au dispositif de Brian et Pop.

La présente invention concerne un filtre pour une enceinte de filtre qui convertit l'enceinte de filtre à l'utilisation de filtres jetables. Le filtre comporte un boîtier de support rigide ayant une ouverture d'entrée pour le flux aqueux, un passage de sortie pour le flux aqueux, une surface interne d'étanchéité et un joint de verrouillage situé de manière adjacente par rapport au passage d'entrée, pour relier de manière sûre le boîtier au récipient du filtre pour recevoir l'écoulement aqueux.

A cette fin, le joint de verrouillage du filtre selon l'invention a une forme en coin avec une pointe dirigée vers le passage d'entrée du boîtier et comporte une protubérance qui s'étend dans le passage d'entrée.

Le filtre selon l'invention comporte également une cartouche de filtre jetable. La cartouche comporte un milieu de filtration flexible ayant une première et une seconde extrémités. Un joint d'étanchéité terminal est fixé à la première extrémité du milieu de filtration pour son engagement étanche sur le récipient du filtre et le couvercle du récipient du filtre et une paroi d'étanchéité à la seconde extrémité du milieu de filtration pour son engagement avec la surface interne d'étanchéité du boîtier support. Le milieu de filtration est dimensionné pour être pratiquement entièrement logé à l'intérieur du boîtier support et pour engager de manière étanche la surface interne d'étanchéité dans le boîtier support avec le joint de paroi et le milieu de filtration s'étend en travers d'un parcours depuis les passages d'entrée vers les passages de sortie du boîtier support quand le joint terminal d'étanchéité est en engagement avec le récipient du filtre et le couvercle du récipient du filtre.

Un point de levage peut être formé sur la cartouche de filtre jetable de manière adjacente au joint d'étanchéité terminal pour permettre d'enlever facilement la cartouche soit à la main soit avec un outil.

Le boîtier support peut être installé dans un récipient de filtre pendant une longue période et maintenu en place par le joint de verrouillage et, de manière répétée pendant la longue période, la cartouche de filtre jetable peut être installée à l'intérieur du boîtier de support pour relier de manière étanche la cartouche de filtre jetable au récipient de filtre et au boîtier de support, pour diriger le flux aqueux à travers le milieu de filtration et enlevée et éliminée.

Dans un mode de réalisation préférentiel, le boîtier a une forme cylindrique comportant deux extrémités et des parois latérales internes et externes avec une ouverture d'entrée à une extrémité de la forme cylindrique et une pluralité d'ouvertures de sortie sous la forme de trous dans la paroi latérale externe. Dans le mode de réalisation préférentiel, la cartouche a une forme cylindrique comportant deux extrémités et une paroi latérale, le joint d'étanchéité terminal étant disposé à une extrémité, la paroi latérale s'étendant à travers le parcours entre l'ouverture d'entrée et l'ouverture de sortie du boîtier et le joint d'étanchéité de paroi étant en engagement avec la surface d'étanchéité interne du boîtier.

De manière typique, l'enveloppe est en acier inoxydable. Dans un mode de réalisation préférentiel, la cartouche comporte des extrémités contenant des joints et un milieu de filtration flexible. Le milieu de filtration flexible peut être constitué par tout milieu de filtration souhaitable tel que de la mousse de polysulfone ou du polypropylène. Les joints peuvent être en caoutchouc de silicone.

Suivant un premier aspect de la présente invention, on prévoit un filtre pour enlever des matières en particules d'un flux gazeux comprenant :
a - un boîtier support rigide ayant un passage d'entrée et un passage de sortie pour l'écoulement aqueux et une surface d'étanchéité interne ; et
b - une cartouche de filtration jetable dimensionnée pour être pratiquement entièrement logée à l'intérieur dudit boîtier et ayant un milieu de filtration qui s'étend en travers d'un parcours allant dudit passage d'entrée vers ledit passage de sortie quand elle est logée dans ledit boîtier, ladite cartouche ayant un joint d'étanchéité terminal disposé pour engager de manière étanche ladite cartouche avec un récipient de filtre pour recevoir l'écoulement aqueux, à l'extérieur dudit boîtier quand ladite cartouche est en engagement étanche par un joint d'étanchéité de paroi avec ladite surface d'étanchéité interne dudit boîtier, le boîtier support comportant un joint d'étanchéité de verrouillage situé dans une disposition adjacente par rapport au passage d'entrée, caractérisé en ce que ledit joint de verrouillage a une forme en coin avec une pointe dirigée vers le passage d'entrée du boîtier et qu'il comporte une protubérance qui s'étend dans le passage d'entrée pour engager solidement le boîtier support sur le récipient de filtre pour recevoir l'écoulement aqueux, de sorte que ledit boîtier support puisse être installé dans le récipient de filtre pendant une longue période et maintenu en place par ledit joint d'étanchéité de verrouillage, que, de manière répétée pendant la longue période, ladite cartouche jetable puisse être installée à l'intérieur dudit boîtier de support pour relier de manière étanche ladite cartouche de filtre jetable audit récipient de filtre et audit boîtier, que l'écoulement aqueux puisse être dirigé à travers ledit milieu de filtration et que ladite cartouche de filtre jetable puisse être enlevée et éliminée, sans enlever le boîtier support du récipient de filtre.
De manière plus particulière :
   - le joint de verrouillage est disposé dans une cavité formée dans une plaque de base du boîtier autour du passage d'entrée ;
   - ledit joint de verrouillage est constitué de caoutchouc silicone ;
   - le joint d'étanchéité de paroi de la cartouche n'est pas en contact avec le fond du boîtier, de manière que l'écoulement aqueux pénètre dans un espace compris entre la cartouche et le fond du boîtier ;
   - le filtre comporte de plus une enveloppe interne pour protéger ladite cartouche de filtre jetable lors d'un renversement accidentel de l'écoulement de fluide ;
   - l'enveloppe interne a une forme cylindrique comportant deux extrémités et une paroi latérale, avec un passage d'entrée à une extrémité de la forme cylindrique et une pluralité de passages de sortie sous la forme d'ouvertures dans ladite paroi latérale ;
   - ladite enveloppe interne est en acier inoxydable.
   - ladite enveloppe interne comporte un point de levage formé dans une extrémité de ladite enveloppe interne ;
   - le milieu de filtration flexible de la cartouche de filtration est choisi dans le groupe comportant le polyulfone et le polypropylène ;
   - ledit milieu de filtration de la cartouche de filtration filtre des particules entre 0,2 et 100 µm ;
   - le joint d'étanchéité terminal et le joint d'étanchéité de paroi de la cartouche de filtration sont constitués de caoutchouc silicone.
   - la cartouche de filtration a une forme cylindrique comportant deux extrémités et une paroi latérale, ledit joint d'étanchéité terminal étant situé à l'une des extrémités, ladite paroi latérale s'étendant en travers dudit parcours et ledit joint d'étanchéité de paroi s'engageant sur ladite surface d'étanchéité interne dudit boîtier de support ;
   - la cartouche de filtration comporte un point de levage dans une disposition adjacente par rapport au joint terminal comprenant un capot non métallique ayant au moins une ouverture traversante.
   - le point de levage comporte un élément de renforcement non métallique noyé dans le capot.

D'autres aspects de l'invention seront montrés à l'homme de l'art à la lecture de la description qui va suivre du mode de réalisation préférentiel de l'invention, en considérant les dessins.

La figure 1 est une vue en coupe transversale d'un récipient de filtre assurant le maintien du boîtier support qui y est logé et de la cartouche de filtre jetable réalisée suivant la présente invention.

La figure 2 est une vue partielle agrandie de la structure et de la réalisation de l'étanchéité du boîtier support, et

La figure 3 est une vue en coupe transversale de la cartouche de filtre jetable de la présente invention.

Dans la description qui va suivre les mêmes chiffres de repères désignent des parties identiques ou correspondantes dans l'ensemble des vues. Egalement, dans la description qui va suivre, on doit comprendre que des termes tels que "devant", "derrière", "à gauche", "à droite", "au-dessus", "en-dessous", et équivalents sont des mots de convenance et ne doivent pas être interprétés comme des termes limitatifs.

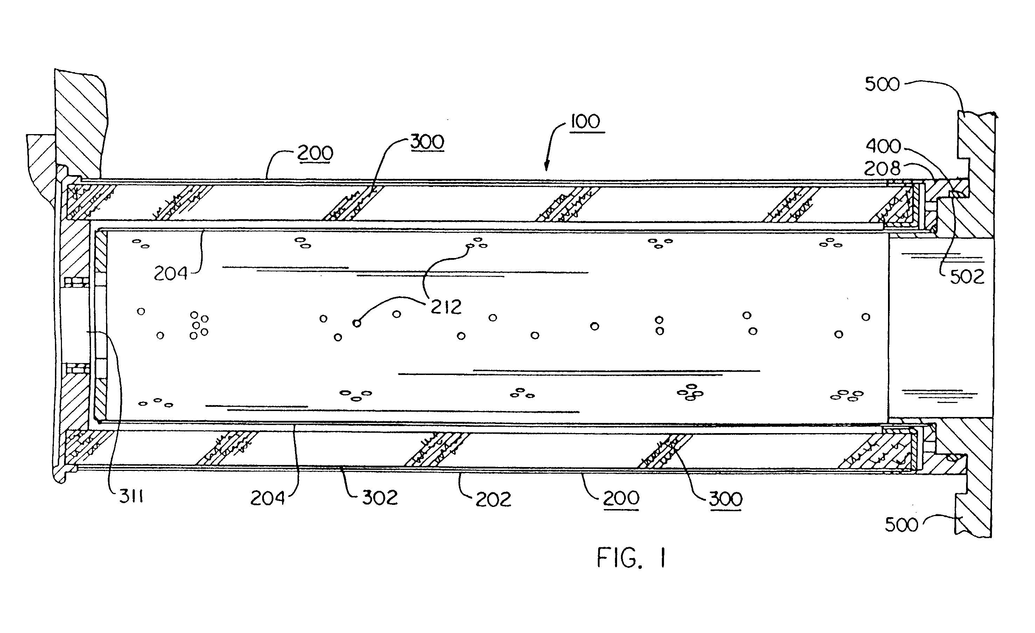

En se référant maintenant aux dessins en général et à la figure 1 en particulier, on comprendra que les illustrations sont données dans le but de décrire un mode de réalisation préférentiel de l'invention et ne sont pas destinées à limiter l'invention.

Comme mieux représenté sur les figures 1 à 3, la présente invention indiquée généralement par le repère 100 comporte un boîtier support 200 et une cartouche filtrante 300. La cartouche filtrante jetable 300 est logée dans le boîtier support 200 qui, à son tour, est inséré dans un récipient de filtre à haute résistance en acier inoxydable 500. La cartouche de filtre jetable 300 comporte un joint terminal d'étanchéité 306, un joint de paroi 308 et un milieu flexible 302 interposé entre ces joints. Le joint terminal d'étanchéité fournit un engagement étanche avec le récipient de filtre 500 (montré dans une vue partielle, en coupe).

De préférence, le milieu flexible 302 est constitué de polypropylène ou de polysulfone. La pratique de la présente invention comporte l'utilisation d'autres matériaux pour réaliser des milieux filtrants convenables qui peuvent être imposés dans une situation particulière. L'intégrité de structure et la capacité de filtration du milieu flexible peuvent être améliorées en prévoyant des plis ou des ondulations dans celui-ci.

Dans un mode de réalisation préférentiel, le milieu flexible 302 filtre des particules dans un intervalle entre à peu près 0,2 et à peu près 100 µm.

Chacun des joints 306, 308 peut être réalisé en un matériau élastomère tel qu'un caoutchouc silicone. Un matériau souhaitable est celui qui est désigné par l'appellation RTV 664 disponible chez General Electric. Le joint 308 a une surface d'étanchéité externe dimensionnée pour créer un ajustement en compression contre la surface d'étanchéité interne 218 située dans la cavité annulaire du joint 216 du boîtier adaptateur 200. La cavité de joint 216 est formée dans la plaque de base massive 208. Le terme «massif» tel qu'utilisé ici se rapporte à l'absence de toute ouverture d'écoulement dans les parois latérales de la plaque de base 208.

Le filtre jetable 300 peut également comporter une ouverture de levage 311 pour faciliter l'enlèvement du boîtier support 200.

Dans un mode de réalisation préférentiel, l'ouverture de levage 311 peut être formée ou adaptée pour recevoir tout type d'outil pour l'enlèvement du filtre jetable 300 du boîtier adaptateur 200. Préférablement, l'ouverture de levage 311 dans le capot du filtre est ronde ou généralement cylindrique. Pour l'économie de la construction, le capot traversé par l'ouverture de levage 311 et le joint terminal d'étanchéité 306 peuvent être réalisés sous forme unitaire en une seule pièce en caoutchouc de silicone.

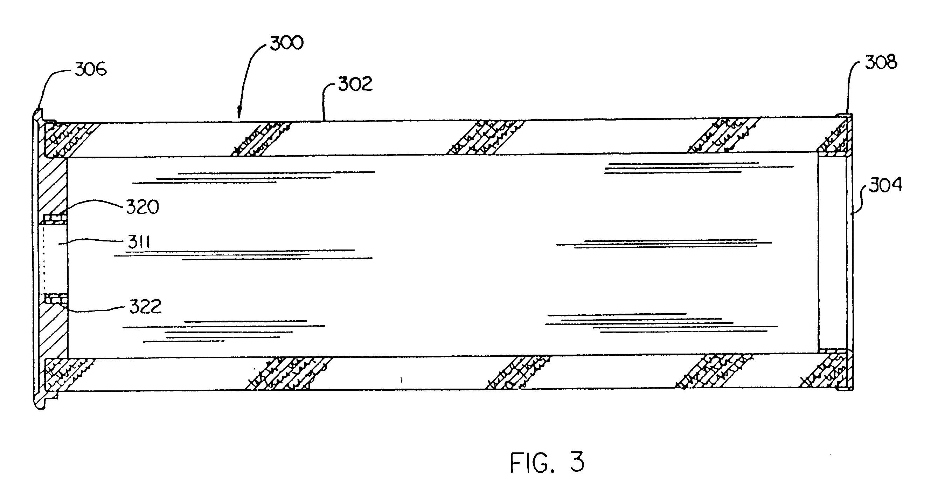

Un élément de renforcement 320 peut être inclus comme montré à la figure 3 pour ajouter de la résistance à l'ouverture de levage 311.

De manière souhaitable, cet élément est constitué d'un matériau non métallique pour faciliter la réduction de volume et accroître le nombre de méthodologies potentielles d'élimination du filtre usé 300. Des matériaux souhaitables comportent des polymères tels que le polyéthylène, le polypropylène, le nylon, des matériaux cellulosiques et identiques. Des céramiques pourraient être utilisées mais ne sont pas considérées comme préférentielles parce qu'elles peuvent présenter des difficultés d'élimination. Du fait que quelques matériaux ne peuvent pas être liés de manière satisfaisante au caoutchouc silicone, une pluralité d'éléments d'ancrage peut être prévue dans l'élément de renforcement.

Dans le mode de réalisation préférentiel représenté à la figure 3, les éléments d'ancrage comprennent une série de trous 322 placés dans l'élément de renforcement circulaire 320. On comprendra facilement que le caoutchouc silicone est amené à couler à l'intérieur et à remplir les trous 322 pendant la formation de l'ouverture de levage 311. D'autres types d'ancrage peuvent être utilisés aussi bien. Par exemple, une série de saillies s'étendant latéralement peuvent être prévues autour de la circonférence de l'élément de renforcement 320.

Comme représenté sur la figure 1, le fond de la cartouche de filtration ne repose pas sur la base de la cavité annulaire d'étanchéité. Egalement, le diamètre intérieur du joint de paroi 308 ne touche pas l'enveloppe interne 204. Ainsi, le fluide à haute pression entrant dans le récipient de filtre 500 remplit l'espace en-dessous de la cartouche de filtration 300 et est arrêté par la surface d'étanchéité.

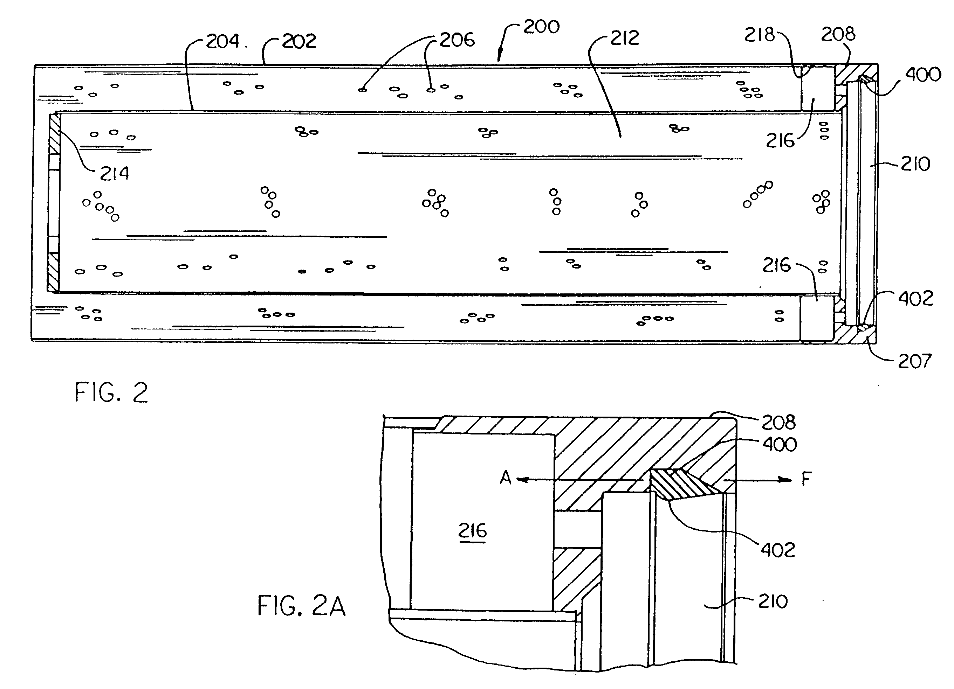

Comme représenté sur la figure 2, le boîtier de support 200 comporte une enveloppe externe 202, un passage d'entrée 210, une cavité annulaire d'étanchéité 216 ayant une surface interne d'étanchéité 218, une base 208 et un joint d'étanchéité de verrouillage 400. L'enveloppe 200 comporte également un passage de sortie qui, dans le mode de réalisation préférentiel est un élément poreux comprenant une pluralité de trous 206. L'enveloppe externe 202 et la base 208 sont réalisées en métal, de préférence en acier inoxydable pour ses qualités de résistance à la corrosion.

L'enveloppe de support 200 peut comporter de plus une enveloppe interne 204 dont la fonction est de protéger le milieu flexible 302 contre des renversements de la pression. Une pression en retour peut être créée de manière non intentionnelle si une vanne de purge est restée ouverte et si ensuite une vanne de sortie en aval de l'assemblage du filtre est ouverte. Une pression statique peut forcer un débit en retour à travers l'unité combinant l'enveloppe 200 et le filtre 300. L'enveloppe interne 204 protège le milieu flexible 302 contre des dommages dans une telle situation. Il n'y a pas besoin d'avoir un contact direct entre ces éléments pour que l'enveloppe interne 204 accomplisse sa fonction de protection.

Dans le mode de réalisation préférentiel, l'enveloppe interne 204 est concentrique par rapport à l'enveloppe externe 202 et est également réalisée en acier inoxydable. Un point de levage 214 peut être prévu pour faciliter l'installation et le démontage dans le récipient de filtre. Comme dans le cas de l'enveloppe externe 202, l'enveloppe interne 204 est poreuse et peut comprendre une pluralité de trous 206 pour l'écoulement du fluide.

Le joint de verrouillage 400 accomplit deux fonctions :
1 - II maintient le boîtier adaptateur en place de telle sorte qu'un filtre jetable usé 300 peut être enlevé.
2 - II crée une étanchéité contre le fluide à haute pression entrant par le passage d'entrée 210 et contournant le joint de paroi 308. Le joint de verrouillage 400 est placé dans une cavité de joint 207 dans la plaque de base 208. Le joint d'étanchéité 400 est en forme de coin en section transversale avec la pointe de la forme dirigée vers le fond du boîtier adaptateur 200.

Le mode de réalisation représenté à la figure 2 est désigné comme mode de réalisation à diamètre intérieur parce que le joint de verrouillage 400 est placé dans le diamètre intérieur de la plaque de base 208. Le joint d'étanchéité de verrouillage comporte une protubérance 402 qui s'étend à l'intérieur du passage d'entrée 210 sur une petite longueur. Du fait que le boîtier support 200 est inséré à l'intérieur du récipient de filtre 500 et fermement logé à l'intérieur, la protubérance 402 est comprimée radialement contre l'ouverture d'entrée 502 du récipient de filtre 500. Toute tentative pour démonter le boîtier support en tirant par le dessus dans la direction de la flèche A est contrée par l'assemblage coopérant entre l'ouverture d'entrée 502 et le joint d'étanchéité de verrouillage 400. La force de frottement montrée par la flèche F à la figure 2A peut être importante en choisissant de manière adéquate les forces de compression X et Y engendrées dans le joint d'étanchéité de verrouillage 400.

Dans un mode de réalisation préférentiel, du caoutchouc silicone est utilisé pour tirer avantage de ces caractéristiques adéquates pour créer l'adaptation coopérante désirée.

On a trouvé que, de manière additionnelle à la force de frottement causée par l'adaptation coopérante entre l'ouverture d'entrée 502 et le joint d'étanchéité de verrouillage 400 qui agit parallèlement à l'axe central du boîtier support 200, une force de compression additionnelle agissant suivant un certain angle par rapport à la ligne centrale du boîtier crée une force de frottement additionnelle lorsque le joint d'étanchéité de verrouillage 400 est tiré vers le haut vers la surface supérieure de la cavité d'étanchéité 207. On a trouvé que les forces de frottement sont si élevées qu'il faut utiliser un dispositif de traction mécanique pour enlever le boîtier support du récipient du filtre. L'avantage de cette disposition est que la cartouche de filtre 300 peut être enlevée du boîtier support 200 sans enlever de manière intempestive le boîtier support 200 du récipient de filtre.

Dans un mode de réalisation alternatif, désigné comme mode de réalisation à diamètre externe, le joint d'étanchéité de verrouillage 400 peut être disposé dans une cavité formée autour de la circonférence extérieure de la plaque de base 208. La protubérance, dans le cas de ce mode de réalisation, rentre en engagement avec la surface intérieure du récipient de filtre pour créer l'assemblage avec compression décrit ci-dessus.

La structure du boîtier support 200 et de la cartouche de filtre 300 fournit plusieurs avantages par rapport aux conceptions selon l'art antérieur.
1 - On n'a pas besoin de mécanisme séparé pour maintenir le boîtier support fermement à l'intérieur du récipient de filtre, lorsqu'on enlève la cartouche de filtre 300 de celui-ci. Le joint d'étanchéité de verrouillage 400 fournit une double fonction, de création d'un joint d'étanchéité hydraulique contre le fluide à haute pression et de verrouillage du boîtier support 200 en position avec seulement une pièce facile à fabriquer.
2 - La charge axiale sur le milieu flexible 302, quand le récipient de filtre 500 est mis sous pression, est réduite par déplacement du joint de paroi à la seconde extrémité depuis le diamètre intérieure vers le diamètre extérieur. Ainsi, un élément de renforcement de structure de la cartouche de filtration 300 n'est pas nécessaire.

La combinaison des structures de joint de verrouillage selon la présente invention élimine le besoin de joints de paroi apparents utilisés dans les conceptions de la technique antérieure. Un tel joint apparent est susceptible de se déformer et d'être endommagé pendant les manipulations de routine.

Encore un autre avantage de la présente invention est que l'installation ou le démontage du boîtier support et le remplacement de la cartouche de filtre peuvent être accomplis en utilisant des outils simples. Ces caractéristiques sont importantes puisque ces tâches sont quelquefois réalisées à distance du fait de niveaux élevés de contamination radio-active présents dans les composants du récipient de filtre 500.

Certaines modifications ou améliorations peuvent être suggérées à l'homme du métier en lisant la présente description. A titre d'exemple, dans un mode de réalisation alternatif, une extrémité de la cartouche de filtre 300 peut être fermée et non pourvue d'un joint d'étanchéité terminal 306, 308. Ce mode de réalisation serait utilisé pour des récipients de filtre 500 ne nécessitant pas de joint d'étanchéité aux deux extrémités de la cartouche de filtre. Egalement, chacun des joints d'étanchéité terminaux 306, 308 peut comporter des éléments de structure noyés et présenter différents types de surface d'étanchéité pour faire passer l'écoulement aqueux de l'extérieur vers l'intérieur du filtre.

On comprendra que toutes ces modifications et améliorations n'ont pas été incorporées dans le présent texte, dans un souci de concision et de lisibilité mais sont en fait dans la portée des revendications qui suivent.

## Revendications

1. Filtre pour enlever une matière en particules d'un écoulement aqueux, comprenant :
a - un boîtier support rigide (200) ayant un passage d'entrée (210) et un passage de sortie (206) pour l'écoulement aqueux et une surface d'étanchéité interne (218) ; et
b - une cartouche de filtration jetable (300) dimensionnée pour être pratiquement entièrement logée à l'intérieur dudit boîtier (200) et ayant un milieu de filtration (302) qui s'étend en travers d'un parcours allant dudit passage d'entrée (210) vers ledit passage de sortie (206) quand elle est logée dans ledit boîtier (200), ladite cartouche (300) ayant un joint d'étanchéité terminal (306) disposé pour engager de manière étanche ladite cartouche (300) avec un récipient de filtre (500) pour recevoir l'écoulement aqueux, à l'extérieur dudit boîtier (200) quand ladite cartouche (300) est en engagement étanche par un joint d'étanchéité de paroi (308) avec ladite surface d'étanchéité interne (218) dudit boîtier, le boîtier support (200) comportant un joint d'étanchéité de verrouillage (400) situé dans une disposition adjacente par rapport au passage d'entrée (210), **caractérisé en ce que** ledit joint de verrouillage (400) a une forme en coin avec une pointe dirigée vers le passage d'entrée (210) du boîtier (200) et qu'il comporte une protubérance (402) qui s'étend dans le passage d'entrée (210) pour engager solidement le boîtier support (200) sur le récipient de filtre (500) pour recevoir l'écoulement aqueux, de sorte que ledit boîtier support (200) puisse être installé dans le récipient de filtre (500) pendant une longue période et maintenu en place par ledit joint d'étanchéité de verrouillage (400), que, de manière répétée pendant la longue période, ladite cartouche jetable (300) puisse être installée à l'intérieur dudit boîtier de support (200) pour relier de manière étanche ladite cartouche de filtre jetable (300) audit récipient de filtre (500) et audit boîtier (200), que l'écoulement aqueux puisse être dirigé à travers ledit milieu de filtration (302) et que ladite cartouche de filtre jetable (300) puisse être enlevée et éliminée, sans enlever le boîtier support (200) du récipient de filtre (500).

2. Filtre suivant la revendication 1, **caractérisé en ce que** le joint de verrouillage (400) est disposé dans une cavité formée dans une plaque de base (208) du boîtier (200) autour du passage d'entrée (210) ;

3. Filtre suivant l'une quelconque des revendications 1 et 2, **caractérisé en ce que** ledit joint de verrouillage est constitué de caoutchouc silicone ;

4. Filtre suivant l'une quelconque des revendications 1 à 3, **caractérisé en ce que** le joint d'étanchéité de paroi (308) de la cartouche (300) n'est pas en contact avec le fond du boîtier (200), de manière que l'écoulement aqueux pénètre dans un espace compris entre la cartouche (300) et le fond du boîtier (200) ;

5. Filtre suivant l'une quelconque des revendications 1 à 4, **caractérisé en ce qu'**il comporte de plus une enveloppe interne (204) pour protéger ladite cartouche de filtre jetable lors d'un renversement accidentel de l'écoulement de fluide ;

6. Filtre suivant la revendication 5, **caractérisé en ce que** l'enveloppe interne (204) a une forme cylindrique comportant deux extrémités et une paroi latérale, avec un passage d'entrée à une extrémité de la forme cylindrique et une pluralité de passages de sortie sous la forme d'ouvertures dans ladite paroi latérale ;

7. Filtre suivant la revendication 6, **caractérisé en ce que** ladite enveloppe interne est en acier inoxydable.

8. Filtre suivant l'une quelconque des revendications 5 à 7, **caractérisé en ce que** ladite enveloppe interne (204) comporte un point de levage (214) formé dans une extrémité de ladite enveloppe interne ;

9. Filtre suivant l'une quelconque des revendications 1 à 8, **caractérisé en ce que** le milieu de filtration flexible (302) de la cartouche de filtration (300) est choisi dans le groupe comportant le polyulfone et le polypropylène ;

10. Filtre suivant l'une quelconque des revendications 1 à 9, **caractérisé en ce que** ledit milieu de filtration (302) de la cartouche de filtration (300) filtre des particules entre 0,2 et 100 µm ;

11. Filtre suivant l'une quelconque des revendications 1 à 10, **caractérisé en ce que** le joint d'étanchéité terminal (306) et le joint d'étanchéité de paroi (308) de la cartouche de filtration (300) sont constitués de caoutchouc silicone.

12. Filtre suivant l'une quelconque des revendications 1 à 11, **caractérisé en ce que** la cartouche de filtration (300) a une forme cylindrique comportant deux extrémités et une paroi latérale, ledit joint d'étanchéité terminal (306) étant situé à l'une des extrémités, ladite paroi latérale s'étendant en travers dudit parcours et ledit joint d'étanchéité de paroi (308) s'engageant sur ladite surface d'étanchéité interne (218) dudit boîtier de support (200) ;

13. Filtre suivant l'une quelconque des revendications 1 à 12, **caractérisé en ce que** la cartouche de filtration (300) comporte un point de levage (311) dans une disposition adjacente par rapport au joint terminal (306) comprenant un capot non métallique ayant au moins une ouverture traversante.

14. Filtre suivant la revendication 13, **caractérisé en ce que** le point de levage comporte un élément de renforcement non métallique noyé dans le capot.

## Patentansprüche

1. Filter zum Entfernen von Materialpartikeln aus einer wäßrigen Strömung, der aufweist:
a - einen festen Trägerbehälter (200) mit einem Einlaß (210) und einem Auslaß (206) für die wäßrige Strömung und einer inneren Dichtungsfläche (218), und
b - einen wegwerfbaren Filtereinsatz (300), dessen Abmessungen so gewählt sind, daß er praktisch vollständig im Inneren des Gehäuses (200) liegt, und ein Filtermedium (302) aufweist, das sich entlang einer Strecke von dem Einlaß (210) zum Auslaß (206) erstreckt, wenn er in dem Behälter (200) liegt, wobei der Einsatz (300) eine Abschlußdichtung (306) aufweist, die den Einsatz (300) dicht mit einem Filterbehältnis (500) für die Aufnahme der wäßrigen Strömung außerhalb des Behälters (200) verbindet, wenn der Einsatz (300) durch eine Wanddichtung (308) in dichter Verbindung mit der inneren Dichtungsfläche (218) des Gehäuses steht, wobei der Trägerbehälter (200) eine Verriegelungsdichtung (400) aufweist, die neben dem Einlaß (210) angeordnet ist,
**dadurch gekennzeichnet, daß**
die Verriegelungsdichtung (400) keilförmig ausgebildet ist, und eine Spitze in Richtung des Einlasses (210) des Gehäuses (200) ausgerichtet ist, und daß sie einen Vorsprung (402) aufweist, der in den Einlaß (210) hineinragt und den Trägerbehälter (200) fest mit dem Filterbehältnis (500) für die Aufnahme der wäßrigen Strömung verbindet, so daß der Trägerbehälter (200) für eine lange Zeitdauer in dem Filterbehältnis (500) installiert sein kann und durch die Verriegelungsdichtung (400) dort verbleiben kann, daß während einer langen Zeitdauer wiederholt der wegwerfbare Einsatz (300) im Inneren des Trägerbehälters (200) installiert werden kann, um den Einsatz des wegwerfbaren Filters (300) dicht mit dem Filterbehältnis (500) und mit dem Behälter (200) zu verbinden, daß die wäßrige Strömung zum Filtermedium (302) dirigiert werden kann und daß der Einsatz des wegwerfbaren Filters (300) entfernt und ausgetauscht werden kann, ohne den Trägerbehälter (200) des Filterbehältnisses (500) zu entfernen.

2. Filter nach Anspruch 1, **dadurch gekennzeichnet, daß** die Verriegelungsdichtung (400) in einem Hohlraum angeordnet ist, der in einer Basisplatte (208) des Behälters (200) um den Einlaß (210) gebildet ist.

3. Filter nach einem der Ansprüche 1 oder 2, **dadurch gekennzeichnet, daß** die Verriegelungsdichtung aus Siliconkautschuk besteht.

4. Filter nach einem der Ansprüche 1 bis 3, **dadurch gekennzeichnet, daß** die Wanddichtung (308) des Einsatzes (300) nicht in Kontakt mit dem Boden des Behälters (200) steht, so daß die wäßrige Strömung in einen Raum zwischen dem Einsatz (300) und dem Boden des Behälters (200) eindringt.

5. Filter nach einem der Ansprüche 1 bis 4, **dadurch gekennzeichnet, daß** er weiterhin eine innere Umhüllung (204) aufweist, um den Einsatz des wegwerfbaren Filters bei einer zufälligen Umkehrung der Strömungsflüssigkeit zu schützen.

6. Filter nach Anspruch 5, **dadurch gekennzeichnet, daß** die innere Umhüllung (204) eine zylindrisch Form und zwei Enden und eine Seitenwand mit einem Einlaß an einem Ende der zylindrischen Form und mehreren Auslässen in der Form von Öffnungen in der Seitenwand aufweist.

7. Filter nach Anspruch 6, **dadurch gekennzeichnet, daß** die innere Umhüllung aus nicht oxidierbarem Stahl besteht.

8. Filter nach einem der Ansprüche 5 bis 7, **dadurch gekennzeichnet, daß** die innere Umhüllung (204) einen Hubpunkt (214) aufweist, der an einem Ende der inneren Umhüllung ausgebildet ist.

9. Filter nach einem der Ansprüche 1 bis 8, **dadurch gekennzeichnet, daß** das flexible Filtermedium des Filtereinsatzes (300) aus der Gruppe gewählt wird, die das Polysulfon und Polypropylen enthält.

10. Filter nach einem der Ansprüche 1 bis 9, **dadurch gekennzeichnet, daß** das Filtermedium (302) des Filtereinsatzes (300) Partikel zwischen 0,2 und 100 µm filtert.

11. Filter nach einem der Ansprüche 1 bis 10, **dadurch gekennzeichnet, daß** die Abschlußdichtung (306) und die Wanddichtung (308) des Filtereinsatzes (300) aus Siliconkautschuk bestehen.

12. Filter nach einem der Ansprüche 1 bis 11, **dadurch gekennzeichnet, daß** der Filtereinsatz (300) eine zylindrische Form mit zwei Enden und einer Seitenwand aufweist, wobei die Abschlußdichtung (306) an einem der Enden liegt und die Seitenwand sich quer zur Strecke erstreckt und die Wanddichtung mit der inneren Dichtungsfläche (218) des Trägerbehälters (200) verbunden ist.

13. Filter nach einem der Ansprüche 1 bis 12, **dadurch gekennzeichnet, daß** der Filtereinsatz (300) einen Hubpunkt (311) neben der Abschlußdichtung (306) aufweist, der eine nichtrnetallische Kappe mit mindestens einer Queröffnung aufweist.

14. Filter nach Anspruch 13, **dadurch gekennzeichnet, daß** der Hubpunkt ein nichtmetallisches Verstärkungselement aufweist, das in die Abdeckung eingelassen ist.

## Claims

1. A filter for removing a material in particle form from an aqueous flow, comprising:
a - a rigid support casing (200) having an intake passage (210) and a discharge passage (206) for the aqueous flow and an internal sealing surface (218); and
b - a disposable filtration cartridge (300) which is so dimensioned that it can be practically entirely housed in the interior of said casing (200) and having a filtration medium (302) which extends across a path from said intake passage (210) towards said discharge passage (206) when it is housed in said casing (200), said cartridge (300) having a terminal sealing joint (306) disposed to engage said cartridge (300) in sealing relationship with a filter container (500) for receiving the aqueous flow, on the exterior of said casing (200) when said cartridge (300) is in sealing engagement by a wall sealing joint (308) with said internal sealing surface (218) of said casing, the support casing (200) comprising a locking sealing joint (400) disposed in an adjacent position with respect to the intake passage (210), **characterised in that** said locking joint (400) is of a wedge shape with a point directed towards the intake passage (210) of the casing (200) and that it comprises a protuberance (402) which extends into the intake passage (210) to firmly engage the support casing (200) on the filter container (500) for receiving the aqueous flow, in such a way that said support casing (200) can be installed in the filter container (500) for a long period and held in place by said locking sealing joint (400), that repeatedly during the long period said disposable cartridge (300) can be installed in the interior of said support casing (200) for sealingly connecting said disposable filter cartridge (300) to the filter container (500) and to said casing (200), that the aqueous flow can be directed through said filtration medium (302) and that said disposable filter cartridge (300) can be removed and got rid of without removing the support casing (200) from the filter container (500).

2. A filter according to claim 1 **characterised in that** the locking joint (400) is disposed in a cavity formed in a base plate (208) of the casing (200) around the intake passage (210).

3. A filter according to either one of claims 1 and 2 **characterised in that** said locking joint is formed by silicone rubber.

4. A filter according to any one of claims 1 to 3 **characterised in that** the wall sealing joint (308) of the cartridge (300) is not in contact with the bottom of the casing (200) in such a way that the aqueous flow penetrates into a space between the cartridge (300) and the bottom of the casing (200).

5. A filter according to any one of claims 1 to 4 **characterised in that** it also comprises an internal jacket (204) for protecting said disposable filter cartridge upon accidental reversal of the fluid flow.

6. A filter according to claim 5 **characterised in that** the internal jacket (204) is of a cylindrical shape comprising two ends and a side wall, with an intake passage at one end of the cylindrical shape and a plurality of discharge passages in the form of openings in said side wall.

7. A filter according to claim 6 **characterised in that** said internal jacket is of stainless steel.

8. A filter according to any one of claims 5 to 7 **characterised in that** said internal jacket (204) comprises a lifting point (214) formed in an end of said internal jacket.

9. A filter according to any one of claims 1 to 8 **characterised in that** the flexible filtration medium (302) of the filtration cartridge (300) is selected from the group comprising polysulphone and polypropylene.

10. A filter according to any one of claims 1 to 9 **characterised in that** said filtration medium (302) of the filtration cartridge (300) filters particles of between 0.2 and 100 µm.

11. A filter according to any one of claims 1 to 10 **characterised in that** the terminal sealing joint (306) and the wall sealing joint (308) of the filtration cartridge (300) are formed of silicone rubber.

12. A filter according to any one of claims 1 to 11 **characterised in that** said filtration cartridge (300) is of a cylindrical shape comprising two ends and a side wall, said terminal sealing joint (306) being disposed at one of the ends, said side wall extending across said path and said wall sealing joint (308) engaging on said internal sealing surface (218) of said support casing (200).

13. A filter according to any one of claims 1 to 12 **characterised in that** the filtration cartridge (300) comprises a lifting point (311) at an adjacent placement with respect to the terminal joint (306) comprising a non-metallic cap having at least one opening therethrough.

14. A filter according to claim 13 **characterised in that** the lifting point comprises a non-metallic reinforcing element embedded in the cap.
